# EUROPÄISCHE PATENTANMELDUNG

(11) **EP 4 541 437 A2**
(43) Veröffentlichungstag der Anmeldung: **23.04.2025**
(21) Anmeldenummer: 25157128.7
(22) Anmeldetag: 17.05.2018
(51) Int. Cl.: A63F 13/00

(54) **LANDBASIERTE TRAININGSEINRICHTUNG FÜR EINE UNTERSEEBOOTBESATZUNG**

(30) Priorität: 24.05.2017 DE 102017208866
(62) Teilanmeldung aus: 18725217.6
(71) Anmelder: thyssenkrupp Marine Systems GmbH, 24143 Kiel (DE); thyssenkrupp AG, 45143 Essen (DE)
(72) Erfinder: Schlenger, Johannes, 25337 Kölln-Reisiek (DE); Braß, Stephan, 51515 Kürten (DE); Matthiesen, Jan, 22297 Hamburg (DE)
(74) Vertreter: thyssenkrupp Intellectual Property GmbH

(57) **Zusammenfassung**

Die vorliegende Erfindung betrifft einen Simulator, wobei der Simulator zur Simulation eines Unterseebootes dient, wobei der Simulator wenigstens einen ersten Simulationsraum 10 aufweist, wobei der erste Simulationsraum 10 einen ersten Bereich eines Unterseebootes dinglich nachbildet, wobei der Simulator eine Vorrichtung zur Erzeugung einer virtuellen Realität 30 aufweist, wobei die virtuelle Realität 30 wenigstens die nicht im Simulationsraum 10 dinglich nachgebildeten Bereiche virtuell nachbildet, welche bei einer Verwendung des Unterseebootes für die Besatzung zugänglich sind, wobei der wenigstens eine erste Simulationsraum 10 wenigstens eine erste Zugangsvorrichtung 50 zum Eintritt in die virtuelle Realität 30 aufweist.

## Beschreibung

Die Erfindung betrifft einen Simulator zum Training einer Crew insbesondere eines Unterseebootes, wobei die Simulation einen Simulationsraum und eine virtuelle Simulationsumgebung umfasst. Hierbei ist es möglich, während des Trainings virtuell aus dem Simulationsraum die virtuelle Simulationsumgebung zu betreten. Hierdurch ist ein Training auch für hochkomplexe Systeme, wie zum Beispiel ein Unterseeboot, effizient möglich.

Simulatoren umfassen üblicherweise einen Simulationsraum, welcher einen wichtigen Bereich des zu simulieren Fahrzeugs wiedergibt. Bei einem Flugzeug handelt es sich zum Beispiel um das Cockpit. Dieses ist für die meisten Anwendungen ausreichen, da das zu trainierende Personal regelmäßig den Bereich nicht während des normalen Betriebes verlassen muss.

Bei einem Unterseeboot stellt sich jedoch eine ganz andere Aufgabe. Hier ist es regelmäßig notwendig nicht nur an einer Station zu trainieren, sondern üblicherweise müssen Personen an mehrere Orte des Unterseeboots gelangen können. Daher werden Trainings regelmäßig in realen Unterseebooten durchgeführt. Dieses führt jedoch dazu, dass das Unterseeboot während der Trainingszeit nicht für einen Einsatz zur Verfügung steht.

Aus der US 2015/0206474 A1 ist ein augmented reality system bekannt, welches mit Hilfe eines Headsets virtuelles in eine physische Umgebung projiziert.

Aufgabe der Erfindung ist es, einen Simulator bereitzustellen, welcher ein Training für eine Crew eines Unterseeboots ermöglicht, ohne jedoch ein reales Unterseeboot hierfür bereitzustellen.

Gelöst wird diese Aufgabe durch einen Simulator mit den in Anspruch 1 angegebenen Merkmalen. Vorteilhafte Weiterbildungen ergeben sich aus den Unteransprüchen, der nachfolgenden Beschreibung sowie den Zeichnungen.

Der erfindungsgemäße Simulator dient zur Simulation eines Unterseebootes. Der Simulator weist wenigstens einen ersten Simulationsraum auf, wobei der erste Simulationsraum einen ersten Bereich eines Unterseebootes dinglich nachbildet. Der erste Bereich ist der Kontrollraum, die sogenannte Brücke, des Unterseeboots. Der Simulator weist weiter eine Vorrichtung zur Erzeugung und Darstellung einer virtuellen Realität auf, wobei die virtuelle Realität wenigstens die nicht im Simulationsraum dinglich nachgebildeten Bereiche, beispielsweise und insbesondere Räume und Gegenstände eines Unterseeboots virtuell nachbildet, soweit sie bei einem Unterseeboot für die Besatzung zugänglich sind. Räume und Gegenstände, welche keine Bedeutung für eine Simulation haben, können zur Vereinfachung weggelassen werden, beispielsweise Gegenstände, welche beispielsweise nur der Verpflegung an Bord dienen. Hierdurch wird es möglich den im ersten Simulationsraum vorhandenen ersten Bereich zu ergänzen und so das gesamte Unterseeboot der Simulation und damit dem Training zur Verfügung zu stellen. Der wenigstens eine erste Simulationsraum weist wenigstens eine erste Zugangsvorrichtung zum Eintritt in die virtuelle Realität auf. Durch diese erste Zugangsvorrichtung ist es einer zu trainierenden Person während der Simulation möglich den ersten Bereich, welcher im ersten Simulationsraum wiedergegeben ist, virtuell zu verlassen und andere Bereiche des Unterseeboots virtuell zu betreten. Hierdurch können Handlungen in allen Bereichen vorgenommen werden. Eine Simulation ist somit nicht nur auf einen räumlich beschränkten Bereich begrenzt. Gegenüber einer vollständigen Simulation in einer virtuellen Realität führt die Verwendung eines ersten Simulationsraums mit realen Bauteilen eine starke Verbesserung des Trainings aufgrund einer besseren praktischen Erfahrung der zu trainierende Person zu wesentlich verbesserten Trainingsergebnissen.

Es gibt somit einen ersten Bereich, der dinglich nachgebildet wird, den sogenannten Simulationsraum. Dieser wird dem entsprechend nicht ausschließlich in der virtuellen Realität abgebildet. Alle Bereiche außerhalb des Simulationsraums befindlichen Bereiche des Unterseeboots werden ausschließlich in der virtuellen Realität abgebildet. Über die erste Zugangsvorrichtung kann der in der virtuellen Realität abgebildete Bereich gleichsam betreten werden, wobei die Person physisch jedoch im ersten Simulationsraum verbleibt. Die Simulation umfasst natürlich sowohl den ersten Bereich als auch die in der virtuellen Realität und somit nicht im Simulationsraum dinglich nachgebildeten Bereiche. In der ersten Zugangsvorrichtung wird über Eingabevorrichtungen, wie beispielsweise eine Tastatur, eine Zeigegerät oder einen berührungsempfindlichen Bildschirm die durch die Zugangsvorrichtung auf einem Display, wie beispielsweise einem Bildschirm oder einer Brille, dargestellte virtuelle Realität manipuliert. Insbesondere wird die Person auch in der virtuellen Realität, als sogenannter Avatar abgebildet. Manipulationen durch die Person im Simulationsraum oder den Avatar in der ersten Zugangsvorrichtung, also in allen Bereichen, werden entsprechend erfasst und die sich daraus ergebenden Veränderungen in der Simulation ausgegeben. Die Veränderungen werden dabei in allen betroffenen Bereichen ausgegeben. Dabei kann die Veränderung nur den Simulationsraum, nur die virtuelle Realität oder beide Bereiche betreffen. Beispielsweise kann eine Veränderung der Trimmtanks in der virtuellen Realität zu einer Lageänderung des Unterseeboots in der virtuellen Realität führen und eine Veränderung der Lage des ersten Simulationsraums bewirken, wenn dieser bewegbar gelagert ist. Ebenso führen Eingaben, welche im ersten Simulationsraum, beispielsweise an realen Konsolen, vorgenommen werden, auch zu Veränderungen in der virtuellen Realität. In einem Sonderfall können Veränderungen aber auch in keinem der beiden Bereiche ausgegeben werden. Beispielsweise, wenn die Veränderung nicht unmittelbar eintritt. Eine Person bedient somit Einrichtungen im dinglich nachgebildeten Bereich des ersten Simulationsraumes oder in der virtuellen Realität. Der erste Bereich kann auch in der virtuellen Realität abgebildet oder teilabgebildet werden, um einer Person, welche sich nicht im ersten Simulationsraum aufhält und nur als Avatar in der virtuellen Realität teilnimmt, einen Übergang von einem zweiten Bereich, welcher auf einer ersten Seite des ersten Bereichs angeordnet ist, in einen dritten Bereich, welcher auf einer zweiten Seite des ersten Bereichs angeordnet ist, ermöglichen zu können. Hierbei kann der erste Bereich auch stark vereinfach, gegebenfalls nur als Durchgang und ohne Widergabe von Avataren der Personen, welche sich im ersten Simulationsraum befinden, widergegeben werden.

Unter virtueller Realität im Sinne der Erfindung wird ein dreidimensionales berechnetes Model verstanden, welches zum einen die Umgebung, das Innere des Unterseeboots, widergibt. Zum anderen umfasst die virtuelle Realität auch die Möglichkeit mit dieser Umgebung zu interagieren, beispielsweise Schaltelemente zu bedienen, Hydraulikleitungen zu öffnen oder zu schließen, mechanische Vorrichtungen zu betätigen. Des Weiteren umfasst die virtuelle Realität die Berechnung der Auswirkungen dieser Interaktionen gegebenenfalls zuzüglich äußerer Einflussgrößen, welche durch das in der Simulation gegebene Szenario vorgegeben werden, beispielsweise simulierte Systemausfälle, Beschädigungen und dergleichen.

Eine Zugangsvorrichtung zum Eintritt in die virtuelle Realität im Sinne der Erfindung dient zur Darstellung der in der virtuellen Realität erzeugten Bereiche des Unterseebootes und verfügt über Eingabevorrichtung zur Manipulation. Beispielsweise kann die Darstellung der virtuellen Realität über einen Bildschirm oder eine entsprechende Brille erfolgen. Die Eingabe zur Manipulation kann beispielsweise per Tastatur, Maus oder auch Gestenerkennung erfolgen. Eine Zugangsvorrichtung umfasst daher wenigstens eine Wiedergabevorrichtung und wenigstens eine Eingabevorrichtung. Besonders bevorzugt weist eine Zugangsvorrichtung zusätzlich eine akustische Kommunikationsvorrichtung auf, beispielsweise und insbesondere bestehend aus einem Mikrophon und Kopfhörern.

Unter Eintritt in die virtuelle Realität im Sinne der Erfindung wird das Benutzen der Zugangsvorrichtung verstanden. Im einfachsten Fall kann der Eintritt in die virtuelle Realität beispielsweise durch das Aufsetzen einer entsprechenden Brille und dem Aufsetzen eines entsprechenden Headsets erfolgen.

In einer weiteren Ausführungsform der Erfindung weist der Simulator wenigstens einen ersten Schulungsraum auf, wobei der wenigstens eine erste Schulungsraum wenigstens eine zweite Zugangsvorrichtung zum Eintritt in die virtuelle Realität aufweist. Auf diese Weise ist es möglich, dass sowohl Personen im ersten Simulationsraum trainiert werden als auch Personen, welche sich ausschließlich in den Bereichen bewegen, welche mittels virtueller Realität abgebildet werden. Hierdurch ist es insbesondere möglich die gesamte Schiffscrew gleichzeitig zu trainieren.

In einer weiteren Ausführungsform der Erfindung weist der Simulator erste Eingabemittel in dem wenigstens einen ersten Simulationsraum auf. Der Simulator weist zweite Eingabemittel in der virtuellen Realität auf. Eingabemittel im Sinne der Erfindung umfassen alle Möglichkeiten der Interaktion einer Person mit einem Unterseeboot. Hierbei kann es sich um beispielsweise aber nicht beschränkt auf Computerkonsolen, Hebel, Ventile, Schalter und dergleichen handeln. Beispielsweise kann die Trimmung über die entsprechenden Eingabemittel an einer Computerkonsole des Unterseeboot-Automationssystems im ersten Simulationsraum erfolgen aber genauso auch über Handtrimmpumpen. Dieses dient beispielsweise dem Einüben des Verhaltens beim Ausfall des primären Systems. Der Simulator verwendet Eingaben über die ersten Eingabemittel und Eingaben über die zweiten Eingabemittel zur Simulation des wenigstens einen ersten Simulationsraums. Ebenso verwendet der Simulator Eingaben über die ersten Eingabemittel und Eingaben über die zweiten Eingabemittel zur Simulation der virtuellen Realität. Gerade das oben genannte Beispiel bezüglich der Trimmung zeigt, dass lediglich in der Verwendung der Eingaben über erste Eingabemittel und zweite Eingabemittel eine vollständige Simulation im Simulator möglich ist.

Erste Eingabemittel umfassen insbesondere Schalt- und Steuertafeln, wie diese in realen Unterseebooten zum Einsatz kommen. Beispielsweise und insbesondere ist der Kontrollraum mit echten, auch für den Einsatz in einem realen Unterseeboot geeigneten Einrichtungen ausgestattet. Die Eingabe erfolgt somit exakt identisch zur Eingabe in einem Unterseeboot, wodurch das Trainingsergebnis verbessert wird.

Zweite Eingabemittel sind die in der virtuellen Realität abgebildete Vorrichtungen, beispielsweise Schalttafel, Ventile, Hebel, Klappen, Türen, Computer und dergleichen. Prinzipiell umfassen die zweiten Eingabemittel alles, was in einem Unterseeboot durch die Besatzung manipuliert werden kann. Hierbei kann zur Vereinfachung der Simulation eine Auswahl getroffen werden, welche Eingabemittel nicht darstellt, welche keinen Einfluss auf das Bootsverhalten haben.

Eingabevorrichtungen umfassen Tastatur, Maus, Gestenerkennung, Spracherkennung, Motion-Capturing und dergleichen.

In einer weiteren Ausführungsform der Erfindung ist die virtuelle Realität derart ausgebildet, dass die Auswahl eines zweiten Eingabemittels zweistufig erfolgt, wobei eine Person zunächst einen Bereich mit mehreren zweiten Eingabemitteln auswählt, wobei der Simulator die ausgewählten mehreren zweiten Eingabemittel vergrößert darstellt, wobei die Person anschließend ein bestimmtes zweites Eingabemittel auswählen kann. Dieses ist besonders vorteilhaft, wenn in dem Bereich mehrere zweite Eingabemittel dicht beieinander liegen oder diese zweiten Eingabemittel auch hintereinander angeordnet sein können. Dieses entspricht auch dem natürlichen Verhalten einer Person, welche einen Bereich, in welchem sie arbeiten möchte, zunächst auswählt und sich dann auf diesen auch in ihrer Wahrnehmung fokussiert. Dieses kann beispielsweise das Öffnen einer Klappe oder ein Bücken der Person zu einem Ventil hin beinhalten.

In einer weiteren Ausführungsform der Erfindung ist der Simulator zum gleichzeitigen Training einer Mehrzahl an Personen ausgebildet. Der Simulator weist Kommunikationsmittel auf. Die Kommunikationsmittel sind so gestaltet, dass eine Person nur mit einer anderen Person über die Kommunikationsmittel kommunizieren kann, sofern dieses auch im Unterseeboot möglich ist. Beispielsweise können Personen, welche sich im ersten Simulationsraum befinden, direkt miteinander reden. Personen, welche sich in verschiedenen Räumen des Unterseeboots in der virtuellen Realität befinden, können nur, beispielsweise über ein Headset, miteinander reden, wenn diese beispielsweise eine Gegensprechanlage, beispielsweise im ersten Simulationsraum beziehungsweise in der virtuellen Realität, verwenden oder sich gemeinsam in Räumen ohne Trennung durch Türen oder Schotten, insbesondere virtuelle geschlossene schalldichte Türen oder Schotten, befinden, wobei der Abstand den normalen möglichen Kommunikationsabstand in einem Unterseeboot nicht überschreitet. Dieses unterscheidet einen solchen Simulator grundlegend von üblichen Anwendungen der virtuellen Realität, bei welcher üblicherweise alle Teilnehmer ständig miteinander kommunizieren können. Eine solche Kommunikationsmöglichkeit würde jedoch eine nicht lebensnahe Trainingssituation darstellen, was das Trainingsergebnis im Simulator verschlechtern würde.

In einer weiteren Ausführungsform der Erfindung erlauben die Kommunikationsmittel eine Kommunikation, sofern die beteiligten Personen sich im gleichen virtuellen Raum befinden oder ein virtuelles Kommunikationsmittel, beispielsweise eine Gegensprechanlage, verwenden.

In einer weiteren Ausführungsform der Erfindung ist der wenigstens eine erste Simulationsraum bewegbar gelagert. Insbesondere kann der erste Simulationsraum entsprechend der simulierten Lage des Unterseeboots im Raum geneigt und/oder gekippt werden.

In einer weiteren Ausführungsform der Erfindung ist der Simulator zur Wiedergabe von am Training beteiligten Personen in Form von Avataren in der virtuellen Realität ausgebildet. Ein Avatar muss hierbei nicht eine bestimmte Person, insbesondere nicht das Aussehen der repräsentierten Person, wiedergeben. Zur Vereinfachung wird vorzugsweise mit generischen Avataren gearbeitet. Aufgrund der räumlichen Enge in einem Unterseeboot ist gerade die Interaktion zwischen beteiligten Personen sehr wichtig. Damit eine Person schnell zu einem Ort einer Handlung gelangen kann ist regelmäßig das Passieren weiterer Personen notwendig. Um somit ein gutes Trainingsergebnis zu erreichen, ist die Simulation aller beteiligten Personen, welche sich in der virtuellen Realität befinden, zweckdienlich.

In einer weiteren Ausführungsform der Erfindung weist der Simulator wenigstens erste Programmelemente und zweite Programmelemente auf. Die ersten Programmelemente dienen zur Berechnung des Verhaltens des Unterseeboots. Beispielsweise dienen die ersten Programmelemente der Berechnung der Lage des Unterseeboots im Raum abhängig von der Trimmlage. Die zweiten Programmelemente dienen der Simulation der Steuerung des Unterseeboots mittels der eingebauten Komponenten. Besonders bevorzugt handelt es sich bei den zweiten Programmelementen um die Programmelemente, welche auch im Unterseeboot selbst Verwendung finden. Beispielsweise dienen zweite Programmelemente zur Ansteuerung der Trimmpumpen nach Eingabe entsprechender Eingabewerte über eine Dateneingabestation.

In einer weiteren Ausführungsform der Erfindung weist der Simulator einen Kontrollraum auf. Der Kontrollraum weist Steuereingabemittel auf, wobei die Steuereingabemittel zum Eingriff in die Simulation ausgebildet sind. Beispielsweise können über Steuereingabemittel der Ausfall einzelner Stationen oder auch ein Wassereinbruch simuliert werden. Hierdurch können auch nicht übliche Betriebszustände leicht dargestellt werden.

In einer weiteren Ausführungsform der Erfindung weist der Simulator wenigstens einen zweiten Schulungsraum auf, wobei der wenigstens eine zweite Schulungsraum Vorrichtungen dinglich enthält, welche sich in einem Unterseeboot üblicherweise im dem im Simulator nur in der virtuellen Realität befinden. Der zweite Schulungsraum dient dazu, den händischen Umgang mit solchen Vorrichtungen zu trainieren. Bei den Vorrichtungen kann es sich beispielsweise um Verbindungen handeln, welche beispielsweise auseinander oder zusammen geschraubt werden müssen. Hierbei geht es um das konkrete händische Training an diesen Vorrichtungen, um die konkreten Handgriffe durch praktisches Tun einfach und effizient zu trainieren.

Nachfolgend ist der erfindungsgemäße Simulator anhand eines in den Zeichnungen dargestellten Ausführungsbeispiels näher erläutert.

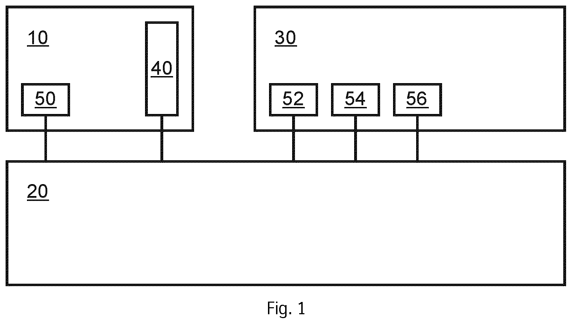

### Fig. 1 schematische Darstellung eines Simulators

In Fig. 1 ist ein Simulator mit einem ersten Simulationsraum 10 und einem ersten Schulungsraum 20 gezeigt. Der erste Simulationsraum ist vorzugsweise bewegbar gelagert, sodass die Bewegungen des simulierten Unterseeboots direkt wiedergegeben werden und somit für trainierende Personen im ersten Simulationsraum 10 spürbar sind. Der erste Simulationsraum 10 weist erste Zugangsmittel 40 auf. Hierbei handelt es sich vorzugsweise um Konsolen, welche auch auf einem realen Unterseeboot eingesetzt werden. Über diese Konsolen kann die Besatzung Steuermaßnahmen ergreifen. In dem ersten Simulationsraum 10 ist eine erste Zugangsvorrichtung 50 angeordnet. Eine Person, welche im ersten Simulationsraum 10 trainiert, kann diese erste Zugangsvorrichtung 50 verwenden, um virtuell den im ersten Simulationsraum 10 wiedergegebenen Raum zu verlassen. Beispielsweise besteht die erste Zugangsvorrichtung 50 aus einer VR Brille mit Headset und Motion Capturing System.

In einem ersten Schulungsraum 20 sind drei zweite Zugangsvorrichtungen 52, 54, 56 angeordnet. Weitere trainierende Personen können hier den virtuellen Bereich der Simulation betreten.

### Bezugszeichen

- 10: erster Simulationsraum
- 20: erster Schulungsraum
- 30: virtuelle Realität
- 40: erste Eingabemittel
- 50: erste Zugangsvorrichtung
- 52: zweite Zugangsvorrichtung
- 54: zweite Zugangsvorrichtung
- 56: zweite Zugangsvorrichtung

## Patentansprüche

1. Simulator, wobei der Simulator zur Simulation eines Unterseebootes dient, wobei der Simulator wenigstens einen ersten Simulationsraum (10) aufweist, wobei der erste Simulationsraum (10) einen ersten Bereich eines Unterseebootes dinglich mit realen Bauteilen nachbildet, wobei der erste Bereich der Kontrollraum, die sogenannte Brücke, des Unterseeboots ist, wobei der Simulator eine Vorrichtung zur Erzeugung einer virtuellen Realität (30) aufweist, wobei die virtuelle Realität (30) wenigstens die nicht im Simulationsraum (10) dinglich nachgebildeten Bereiche virtuell nachbildet, welche bei einer Verwendung des Unterseebootes für die Besatzung zugänglich sind, wobei der wenigstens eine erste Simulationsraum (10) wenigstens eine erste Zugangsvorrichtung (50) zum Eintritt in die virtuelle Realität (30) aufweist, wobei durch die virtuelle Realität der im ersten Simulationsraum vorhandene erste Bereich ergänzt wird und so das gesamte Unterseeboot der Simulation und damit dem Training zur Verfügung gestellt wird, wobei der Simulator erste Eingabemittel in dem wenigstens einen ersten Simulationsraum aufweist, wobei das erste Eingabemittel Schalt- und Steuertafeln sind, wie diese in realen Unterseebooten zum Einsatz kommen.

2. Simulator nach Anspruch 1, **dadurch gekennzeichnet, dass** der Simulator wenigstens einen ersten Schulungsraum (20) aufweist, wobei der wenigstens eine erste Schulungsraum (20) wenigstens eine zweite Zugangsvorrichtung (52, 54, 56) zum Eintritt in die virtuelle Realität (30) aufweist.

3. Simulator nach einem der vorstehenden Ansprüche, **dadurch gekennzeichnet, dass** der Simulator erste Eingabemittel (40) in dem wenigstens einen ersten Simulationsraum (10) aufweist, wobei der Simulator zweite Eingabemittel in der virtuellen Realität (30) aufweist, wobei der Simulator Eingaben über die ersten Eingabemittel (40) und Eingaben über die zweiten Eingabemittel zur Simulation des wenigstens einen ersten Simulationsraums (10) verwendet, wobei der Simulator Eingaben über die ersten Eingabemittel (40) und Eingaben über die zweiten Eingabemittel zur Simulation der virtuellen Realität (30) verwendet.

4. Simulator nach Anspruch 3, **dadurch gekennzeichnet, dass** die virtuelle Realität (30) derart ausgebildet ist, dass die Auswahl eines zweiten Eingabemittels zweistufig erfolgt, wobei eine Person zunächst einen Bereich mit mehreren zweiten Eingabemittel auswählt, wobei der Simulator die ausgewählten mehreren zweiten Eingabemittel vergrößert darstellt, wobei die Person anschließend ein bestimmtes zweites Eingabemittel auswählen kann.

5. Simulator nach einem der vorstehenden Ansprüche, **dadurch gekennzeichnet, dass** der Simulator zum gleichzeitigen Training einer Mehrzahl an Personen ausgebildet ist, wobei der Simulator Kommunikationsmittel aufweist, wobei die Kommunikationsmittel so gestaltet sind, dass eine Person nur mit einer anderen Person über die Kommunikationsmittel kommunizieren kann, sofern dieses auch im Unterseeboot möglich ist.

6. Simulator nach Anspruch 5, **dadurch gekennzeichnet, dass** die Kommunikationsmittel eine Kommunikation erlauben, sofern die beteiligten Personen sich im gleichen virtuellen Raum befinden oder ein virtuelles Kommunikationsmittel, beispielsweise eine Gegensprechanlage, verwenden.

7. Simulator nach einem der vorstehenden Ansprüche, **dadurch gekennzeichnet, dass** der wenigstens eine erste Simulationsraum (10) bewegbar gelagert ist.

8. Simulator nach einem der vorstehenden Ansprüche, **dadurch gekennzeichnet, dass** der Simulator zur Wiedergabe von am Training beteiligten Personen in der virtuellen Realität (30) ausgebildet ist.
